# EUROPEAN PATENT APPLICATION

(11) **EP 2 436 998 A2**
(43) Date of publication of application: **04.04.2012**
(21) Application number: 10780780.2
(22) Date of filing: 26.05.2010
(51) Int. Cl.: F24F 7/08, F24F 6/00, F24F 11/02, F24F 13/00

(54) **HUMIDIFYING UNIT AND VENTILATING APPARATUS COMPRISING SAME**

(30) Priority: 29.05.2009 KR 20090047443
(71) Applicant: LG Electronics Inc., Seoul 150-721 (KR)
(72) Inventor: YANG, Tae Man, Changwon-si Gyeongsangnam-do 641-711 (KR); KIM, Jeong Hun, Changwon-si Gyeongsangnam-do 641-711 (KR); PARK, Hyung Ho, Changwon-si Gyeongsangnam-do 641-711 (KR)
(74) Representative: Vossius & Partner
(86) International application number: PCT/KR2010/003326
(87) International publication number: WO 2010/137869

(57) **Abstract**

The present invention may relate to a humidifying unit. More particularly, the present invention may relate to a humidifying unit with improved humidifying efficiency and increased durability, and to a ventilating apparatus comprising the same.

## Description

### [TECHNICAL FIELD]

The present invention may relate to a humidifying unit. More particularly, the present invention may relate to a humidifying unit with improved humidifying efficiency and increased durability, and to a ventilating apparatus comprising the same.

### [BACKGROUND]

The present invention may relate to a ventilating apparatus, more particularly, to a humidifying unit with improved humidification efficiency and durability and a ventilating apparatus having the humidifying unit.

Generally, a ventilating apparatus may refer to an electric device capable of exhausting contaminated air inside a room and sucking and supplying external clean and fresh air to the room. An air conditioner with no ventilation function may cool or heat internal air while circulating it, to cool or heat a room. Even if a filter and the like are provided in the air conditioner, a contamination level inside the room may increase gradually and there is limitation of air cleaning performed via the filter. Because of that, a ventilation process for the internal air is necessary.

As a result, even an air conditioner installed to cool or heat a room while circulating internal air may have a supplementary ventilating apparatus.

Moreover, such an air conditioner may have a heat exchanger capable of heat-exchanging between air sucked from the outside and air exhausted from a room to minimize heat loss which might occur during the ventilating process between cooled or heated internal air and external air.

Also, a humidifying unit capable of performing a humidification function may be provided in the ventilating apparatus to humidify the sucked air which will be supplied to the room.

Such a humidifying unit includes a humidification member used to absorb water along a preset direction. The humidifying unit transmits the air sucked from the outside between humidification members having water to flow along a preset direction, to supply water elements together with the sucked air to the room.

A conventional humidifying unit may enable an end of the humidification member to absorb water stored in a water supply tank to flow the absorbed water downward, to humidify the sucked air. However, in case of adapting that method enabling the water to flow to the humidification member only along the preset direction, the water wasted during the humidification process may increase.

In other words, the amount of the water elements vaporized and supplied to the room together with the sucked air is much more than the amount of the water elements wasted after not vaporized.

If the amount of the water flowing along the humidification member after absorbed into the humidification member is increased, foreign matters might accumulate on a surface of the humidification member and a life span of the humidification member might be reduced.

Especially, the humidification members provided in the conventional humidifying unit mentioned above may have different water-absorbing and water-flowing directions.

In other words, an upper end of the humidification member includes a bent part along a down direction and an end of the bent part is extended into the water supply tank, to absorb the water stored in the water supply tank and to flow the water along a gravity of the earth, which is the humidification process. The shape of the bent part formed in the humidification member may differentiate the water-absorbing direction from the water-flowing direction. Because of that, there is an advantage of controlling the amount of the absorbed water and a disadvantage of a shortened usage life generated by the accumulating foreign matters such scales on the bent part.

### [DETAILED DESCRIPTION OF THE INVENTION]

### [TECHNICAL PROBLEM]

An object of the present invention may be to provide a humidifying unit with improved humidification efficiency and durability and a ventilating apparatus having the humidifying unit.

### [TECHNICAL SOLUTION]

To realize the object of the present invention, a ventilating apparatus includes a ventilating unit comprising a heat exchanger to heat-exchange air (room air) exhausted from a room with air sucked from the outside (outside air); a humidifying unit comprising a water supply tank to store water configured to humidify the sucked-air (the outside air) sucked by the ventilating unit and a humidification member to humidify the air heat-exchanged in the heat exchanger of the ventilating unit, while having the air to pass there through; and a collecting unit comprising a water collecting tank to collect water failing to be absorbed into the humidification member out of the water supplied from the water supply tank and a collecting pipe to guide the water collected in the water collecting tank toward the water supply tank, wherein the water supply tank is provided beyond the humidification member and the water collecting tank is provided below the humidification member.

Also, the humidifying unit may include a water level sensor provided in the water supply tank and a water supply pipe comprising a water supply valve.

In this case, the water supply valve may be closed when a water level inside the water supply tank that is detected by the water level sensor reaches a preset maximum level and the water supply valve may be open when a water level inside the water supply tank lowered than a preset minimum level.

Here, the humidifying unit may include a water supply pump to pump the water collected in the water collecting tank and a collecting pipe to guide the water pumped by the water supply pump toward the water supply tank.

A plurality of water supply holes may be formed in a bottom of the water supply tank along a width direction of the humidification member, spaced apart a predetermined distance from the humidification member, or at least one water supply slit may be formed in the bottom of the water supply tank along the width direction of the humidification member, to supply the water stored in the water supply tank.

Also, the humidification member of the humidifying unit may include a plurality of bending sheets spaced apart a preset distance from each other, with a corrugation shape, and a plurality of flat sheets provided between two of the bending sheets, respectively.

Also, the humidification member of the humidifying unit may be a flat panel type along a transmitting direction of the air heat-exchanged in the heat exchanger of the ventilating unit.

In this case, a guide rail may be provided along a side of each of the humidification member and the water supply tank, and a guide groove may be provided along the other side, to selectively slide-insert or slide-withdraw the humidification member.

Here, a sealing material may be provided between the water supply tank and the humidification member.

A guide rail may be provided along a side of each of the humidification member and the water supply tank, and a guide groove may be provided along the other side, to selectively slide-insert or slide-withdraw the humidification member, and the sealing material may be provided in parallel to the guide rail or the guide groove.

Also, the sealing material may be a band surrounding the guide rail and the guide groove.

In this case, the water collecting tank of the collecting unit may collect water falling outside the humidification member, failing to be absorbed into the top of the humidification member, out of the water supplied to the humidification member from the water supply tank.

Here, the water collecting tank may include a ring-shaped accommodation space and an opening to open the accommodation space.

The collecting unit may include a collecting pump to pump the water collected in the accommodation space of the water collecting tank toward the water supply tank via a collecting pipe.

Also, the ventilating apparatus may further include a drainage unit comprising a drainage pipe to drain the water introduced into the opening out of the water supplied to the humidification member; and a drain pan.

In this case, the ventilating apparatus may further include a heating/cooling unit to heat or cool the outside air supplied to the humidifying unit, wherein the heating/cooling unit may include a heating/cooling coil including a plurality of fins and a refrigerant pipe passing through the plurality of the fins; and an expansion valve.

In another aspect of the present invention to realize the object of the present invention, a humidifying unit includes a water supply tank to store water therein; a humidification member to absorb the water supplied from the water supply tank and to humidify air passing there through; a water collecting tank to collect water falling outside the humidification member, failing to be absorbed, out of the water supplied to the humidification member; a collecting pipe to provide a passage to re-supply the water collected in the water collecting tank toward the water supply tank; and a drain pan to drain the water discharged after absorbed into the humidification member out of the water supplied to the humidification member.

Here, the humidification member may include a plurality of bending sheets spaced apart a preset distance from each other, with a corrugation shape, and a plurality of flat sheets provided between two of the bending sheets, respectively, and the humidification member may be a flat panel type along a transmitting direction of the air heat-exchanged in the heat exchanger of the ventilating unit.

A guide rail may be provided along a side of each of the humidification member and the water supply tank, and a guide groove may be provided along the other side, to selectively slide-insert or slide-withdraw the humidification member, and a sealing material may be provided between the water supply tank and the humidification member.

Also, the water collecting tank may include a ring-shaped accommodation space and an opening to open the accommodation space, and the drain pan drains the water discharged from the humidification member via an opening of the water collecting tank.

### [ADVANTAGEOUS EFFECTS]

According to the ventilating apparatus according to the present invention, the internal air (the room air) may be ventilated and the moisture may be supplied to the dry air supplied to the room simultaneously. Because of that, the room air may be comfortable.

Furthermore, according to the ventilating apparatus of the present invention, durability of the humidification member provided in the humidifying unit of the ventilating apparatus may be enhanced.

Still further, according to the ventilating apparatus of the present invention, water consumption of the humidification member provided in the humidifying unit may be reduced.

Still further, according to the ventilating apparatus of the present invention, the area and thickness of the humidification member provided in the humidifying unit may be reduced. Because of that, the dimension of the ventilating apparatus may be reduced.

### [BRIEF DESCRIPTION OF THE DRAWINGS]

FIG. 1 is a perspective view illustrating a ventilating apparatus according to the present invention;

FIG. 2 is a perspective view illustrating the ventilating apparatus shown in FIG. 1, seen from a different angle;

FIG. 3 is a diagram illustrating a heat exchanger of a ventilating unit and a heating/cooling coil of a heating/cooling unit

provided in the ventilating apparatus;

FIG. 4 is a diagram illustrating an embodiment of a humidification member provided in the ventilating apparatus according to the present invention;

FIG. 5 is a conceptual diagram illustrating an embodiment of the humidifying unit provided in the ventilating apparatus according to the present invention;

FIG. 6 is a conceptual diagram illustrating another embodiment of the humidifying unit provided in the ventilating apparatus according to the present invention;

FIG. 7 is a perspective view illustrating a humidification member shown in FIG. 6;

FIG. 8 is a conceptual diagram illustrating a further embodiment of the humidifying unit provided in the ventilating apparatus according to the present invention;

FIG. 9 is a diagram illustrating an embodiment of a sealing member;

FIG. 10 is a conceptual diagram illustrating conceptual diagram illustrating a still further embodiment of the humidifying unit provided in the ventilating apparatus according to the present invention; and

FIG. 11 is a perspective view illustrating a water supply tank and a drain pan.

### [BEST MODE]

As follows, exemplary embodiments will be described in reference to the accompanying drawings. Although embodiments have been described with reference to a number of illustrative embodiments thereof, it should be understood that numerous other modifications and embodiments can be devised by those skilled in the art that will fall within the spirit and scope of the principles of this disclosure. More particularly, various variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art. Reference may now be made in detail to specific embodiments, examples of which may be illustrated in the accompanying drawings. Wherever possible, same reference numbers may be used throughout the drawings to refer to the same or like parts.

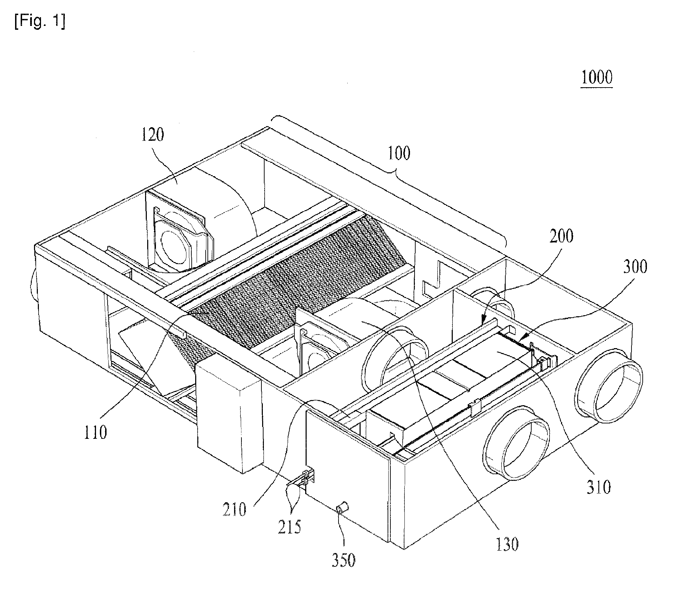

FIG. 1 is a perspective view illustrating a ventilating apparatus 1000 according to the present invention.

The ventilating apparatus according to the present invention may includes a ventilating unit 100 having a heat exchanger to heat-exchange air exhausted from a room and air sucked from an outside with each other, a humidifying unit 300 having a water supply tank to store water used for humidifying the sucked into the ventilating unit, a humidification member to humidify the air passing therein after heat-exchanged in the heat exchanger of the ventilating unit 100, and a collecting unit (not shown) having a water collecting tank to collect water failing to be absorbed into the humidification member 310 out of the water supplied from the water supply tank and a collecting pipe to guide the water collected in the water collecting tank toward the water supply tank. The water supply tank may be provided beyond the humidification member and the water collecting tank may be provided below the humidification member.

The ventilating apparatus 1000 may include the ventilating unit to ventilate internal air with external air. In addition, the ventilating apparatus may include at least one of a heating/cooling unit to heat or cool the sucked-air sucked by the ventilating unit and a humidifying unit to humidify the sucked air of the ventilating unit. The heating/cooling unit and the humidifying unit may improve a comfort level of the sucked air supplied to the room, and users' satisfaction may be improved accordingly.

The ventilating apparatus shown in FIG. 1 will be described in detail as follows. It is assumed that the ventilating apparatus which will be described includes both of the ventilating unit, the heating/cooling unit and the humidifying unit.

The ventilating unit configured to perform a ventilating function of the ventilating apparatus may include at least one ventilation fan. According to the embodiment shown in FIG. 1, the ventilating unit 100 provided in the ventilating apparatus may include an inlet fan 130 and an outlet fan 120. The inlet fan 130 and the outlet fan 120 may suck external air and exhaust internal air, respectively. The inlet fan 130 and the outlet fan 120 may be disposed at both ends of the ventilating unit 100, respectively. The inlet fan 130 may be provided at one of the ends of the ventilating unit 100 toward the room and the outlet fan 120 may be disposed at the other end toward the outside.

A heat exchanger 110 may be provided between the inlet fan 130 and the outlet fan 120, to heat exchange the sucked-air and the exhausted-air with each other. The heat exchanger 110 may stop drastic temperature change of the internal air and lower air-conditioning load of the room by the heat exchange between the sucked-air and the exhausted-air.

For example, when a ventilation process is performed in a cooling process for the room, cooled air inside the room may be exhausted and hot external air may be sucked. Because of that, the cooling load (in other words, air-conditioning load) of the air conditioner may be increased.

As a result, the heat exchanger 110 may heat-exchange the sucked-air and the exhausted-air with each other, only to reduce the cooling load or the heating load. Because of that, temperature anomalies sensed by the user may be reduced as much as possible. The detailed structure of the heat exchanger 110 will be described later.

Each of the inlet fan 130 and the outlet fan 120 may be a cross flow fan. The heat exchanger 110 may be arranged between the inlet fan 130 and the outlet fan 120.

The inlet fan 130 may blow the outside air (the sucked-air) having passed the heat exchanger 110 toward the heating/cooling unit 200 which will be described later. The outlet fan 120 may exhaust the room air (the exhausted-air) having passed the heat exchanger 110 toward the outside.

The outside air sucked by the inlet fan 130 may be blown toward the heating/cooling unit 200. The heating/cooling unit 200 may include a heating/cooling coil 210 to heat or cool the sucked-air having refrigerant transmit there through after the refrigerant is evaporated or condensed, and an expansion valve (not shown) to block or expand the refrigerant selectively.

The refrigerant supplied to the heating/cooling coil may be provided by an outdoor unit independently provided in the air conditioner from the ventilating apparatus.

Here, it is possible to provide a compression and a heat exchanger in the ventilating apparatus. However, to reduce the volume of the ventilating apparatus, to minimize noise generation and to increase heating/cooling efficiency, the refrigerant may be provided to the ventilating apparatus from the outdoor unit of the air conditioner installed outdoor. The heating/cooling coil 210 composing the heating/cooling unit 200 will be described in detail later.

The ventilating apparatus may further include the humidifying unit 300 provided behind the heating/cooling unit 200. The humidifying unit 300 may include the humidification member to humidify the air transmitting there through after absorbing water and it may enable the water to flow downward there along. The humidification member will be described in detail later.

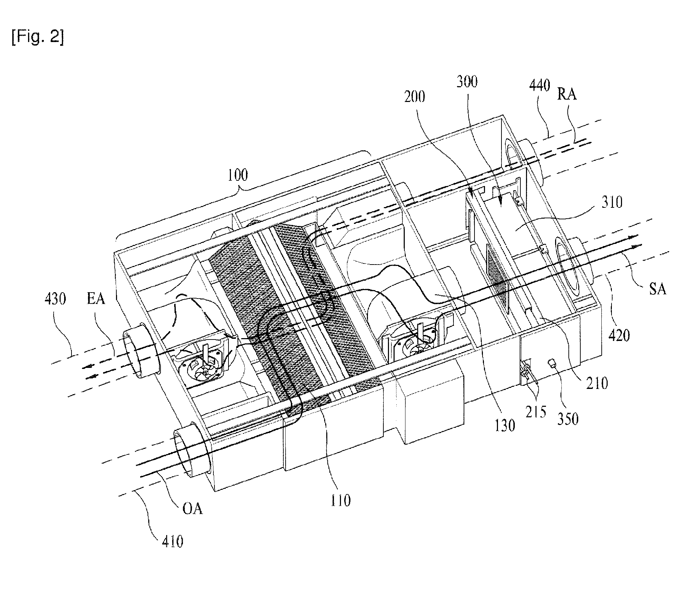

FIG. 2 is a perspective view illustrating the ventilating apparatus shown in FIG. 1, seen from a different angle. The ventilating apparatus may suck external air into the room via a suction hole (not shown) and exhaust internal air outside via an outlet hole (not shown).

The process of exhausting the sucked room air via the ventilating apparatus may be performed by first and second outlet ducts 430 and 440 connected with the ventilating apparatus. The process of sucking the outside air via the ventilating apparatus may be performed by first and second inlet ducts 410 and 420 connected with the ventilating apparatus.

The sucked-air (in other words, the outside air (OA)) sucked via the first inlet duct 410 may be cooled or heated in the heating/cooling coil 210 provided in the heating/cooling unit 200, after heat-exchanged in the heat exchanger 110 provided in the ventilating unit 100. The cooled or heated air may be humidified in the humidifying unit 300 and the humidified air may be supplied to the room (in other words, the supplied-air (SA)).

When the sucked-air heated in the heating/cooling unit 200 is transmitted through the humidifying unit 300 especially in winter, the temperature may be lowered and the humidity may be increased. As a result, the room may be comfortably refreshed. In other words, the air heated in the heating/cooling unit 200 may be easily humidified in the humidifying unit. As a result, the humidifying unit 300 may be useable in lowering the temperature of the dry and heated air and increasing the humidity in the heating mode.

In contrast, the internal air (in other words, room air (RA)) sucked from the room may be bypassed without passing the humidifying unit 300 or the heating/cooling unit 200, to be heat-exchanged in the heat exchanger 110 of the ventilating unit 100. The heat-exchanged air may be exhausted outside (in other words, the exhausted air).

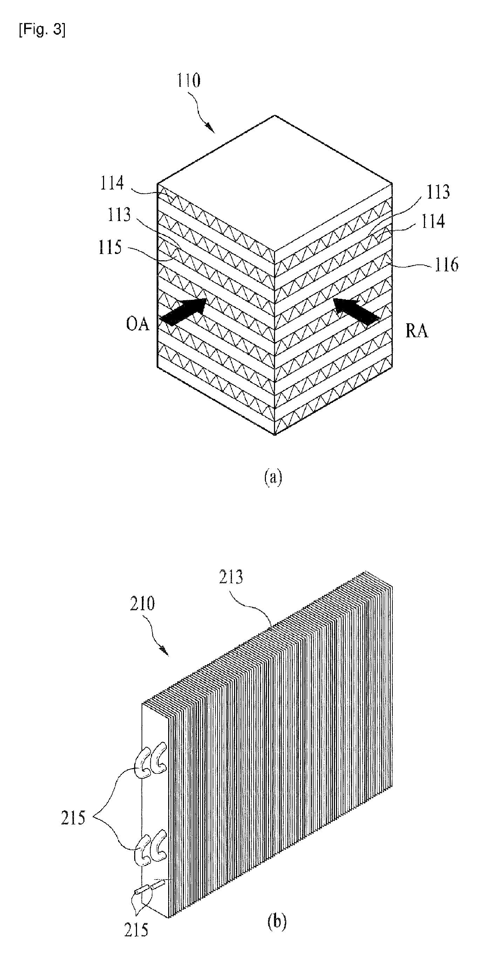

FIG. 3 illustrates the heat exchanger 110 of the ventilating unit 100 and the heating/cooling coil 210 of the heating/cooling unit 200. FIG. 3(a) illustrates the heat exchanger 110 of the ventilating unit 100 and FIG. 3(b) illustrates the heating/cooling coil 210 of the heating/cooling unit 200.

As shown in FIG. 3(a), the heat exchanger 110 may be formed of flat type sheets 113 and bending sheets 114 with corrugation which are multi-layered alternatively. The bending sheets 114 having the flat sheet 113 disposed there between may be perpendicularly alternated with each other. The heat exchanger 110 may be formed of a square bar shape.

A first passage 115 and a second passage 116 may be formed in the heat exchanger 110 by the multi-layering of the flat sheets 113 and the bending sheets 114. The first and second passages 115 and 116 may be at right angles to each other.

An absorbent may be coated on a surface of the flat sheet 113 or the bending sheet 114 composing the heat exchanger 110, to absorb vapors. Such an absorbent may be silica gel, zeolite and ion exchange resin, for example.

Also, a thin film together with the absorbent may be may be coated on the surface of the flat sheet 113 or the bending sheet 114. Because of that, the moisture as well as the heat of the air having passed the first passage 115 and the second passage 116 may exchanged.

In other words, the exhausted-air exhausted from the room (the room air (RA)) may pass the first passage 115 and the sucked-air sucked from the outside (the outside air (OA)) may pass the second passage 116. In this case, the moisture of the exhausted-air may be absorbed by the absorbent in the first passage 115 and the moisture may be supplied to the sucked-air (the room air (OA)) in the second passage 116, only to increase the humidity of the room air (OA). When the humidifying unit 300 is provided in the ventilating apparatus, the humidification process may be performed by the humidifying unit 300. Even without the humidifying unit, the humidity difference between the outside air (OA) and the room air (RA) may be reduced primarily.

FIG. 3(b) is a perspective view illustrating the heating/cooling coil 210 composing the heater/cooer unit 200. The heating/cooling coil 210 may be a fin-tube type heat exchanger, in other words, a cross-fin type heat exchanger. The heating/cooling coil 210 may include a plurality of metal fins 213 formed of metal such as aluminum, with a rectangular plate shape, and a refrigerant pipe 215 passing through the fins 213. Although not shown in FIG. 3, the heating/cooling coil 210 may further include an expansion valve (not shown) to supply refrigerant to the heating/cooling coil 210 selectively. The expansion valve may be an electric expansion valve (EEV). The expansion valve may selectively block or supply the refrigerant or it may expand the refrigerant supplied to the heating/cooling coil 210.

As a result, when cooling the room, the heating/cooling coil 210 may be operated as an evaporator. When heating the room, the heating/cooling coil 210 may be operated as a condenser.

It may be difficult for only the ventilation to provide the sufficient heating and cooling function. Because of that, the ventilating apparatus may be operated in communication with an auxiliary air conditioner. Unless it includes a compressor and the like, the ventilating apparatus may be supplied refrigerant by an outdoor unit of the air conditioner.

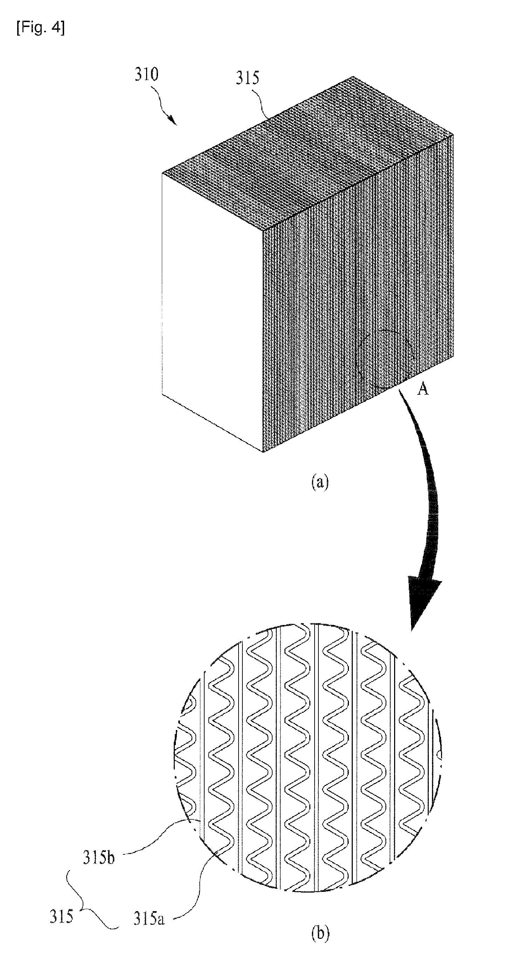

FIG. 4 illustrating an embodiment of the humidification member provided in the ventilating apparatus according to the present invention. Specifically, FIG. 4(a) is a perspective view illustrating a rectangular humidification member 310 and FIG. 4(b) is an enlarged view partially illustrating (A) of FIG. 4(a).

The humidification member shown in FIG. 4 may perform the humidification process of passing the sucked-air there between after absorbing water. The humidification member 310 of the humidifying unit 300 may have a flat panel shape along a direction of the air heat-exchanged in the heat exchanger 110 of the ventilating unit.

The humidification member 310 may be configured of a plurality of moisture absorbents 315a and 315b that are laid over. The moisture absorbents 315a and 315b may be formed of non-woven fabric, to flow the water absorbed therein along a surface thereof or to move the water absorbed therein downwardly.

The humidification member 310 may constantly absorb the water and flow the absorbed water. Simultaneously, the humidification member 310 may transmit air through the moisture absorbents 315a and 315b and it may humidify the sucked-air.

Different from the humidification member shown in FIG. 4(b), the humidification member 310 may include the moisture absorbent configured of a flat moisture absorbent 315a and a bending moisture absorbent 315b alternated with each other. The flat moisture absorbents 315a and the bending absorbents 315b may be disposed alternatively and constantly, with being spaced apart a predetermined distance from each other. This is because the absorbed water has to flow downwardly along a surface of the humidification member 310 smoothly.

The bending absorbent 315b may have an effect of extending the passage of the water flowing along the surface thereof. Because of that, an effect of enlarging the height of the humidification member may be achieved and another effect of increasing the evaporability of the water absorbed into the humidification member 310 may be achieved.

Also, the bending absorbent 315b may bend the passage of the water flowing along a surface thereof. Because of that, the time for the absorbed water to stay in the humidification member 310 may be lengthened and humidification efficiency may be enhanced.

The distance between the flat absorbents 315a may be approximately 5mm and the distance of the bending formed in the bending absorbent 315b may be approximately 9mm.

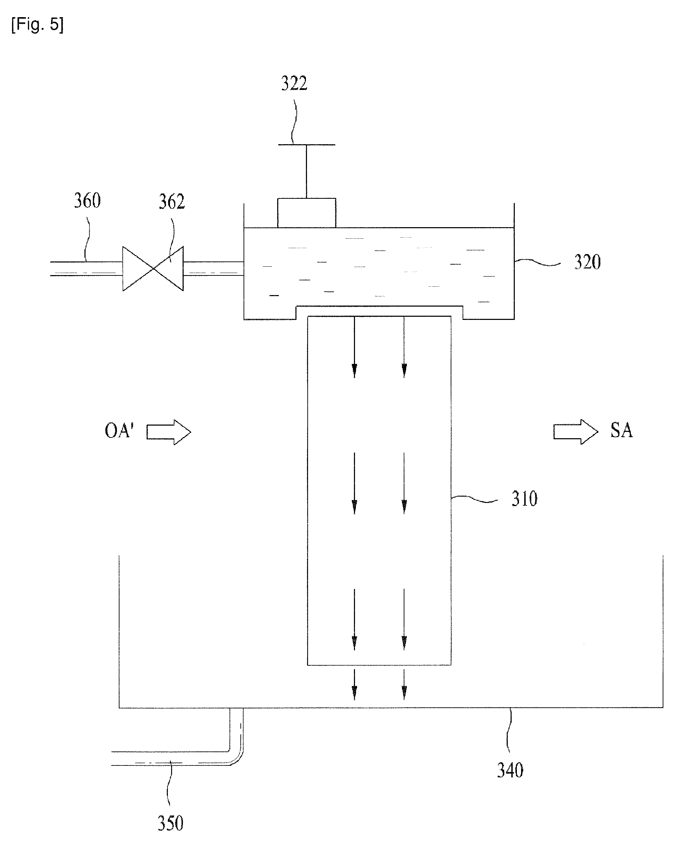

FIG. 5 illustrates a conceptual diagram of an embodiment of the humidifying unit provided in the ventilating apparatus according to the present invention. As shown in FIG. 5, the humidification member 310 may have a structure of absorbing the water from the water supply tank 320 provided above. The water supply tank 320 may include a plurality of water supply holes (not shown) formed at a bottom thereof to supply the water stored therein or at least one water supply slit (not shown). The plurality of the water supply holes may be formed distant along a width direction of the humidification member 310 or the at least one water supply slit (not shown) may be formed along the width direction of the humidification member.

The plurality of the water supply holes may be formed at the bottom of the water supply tank 320, distance from the humidification member along the width direction, or the water supply slit may be formed at the bottom along the width direction of the humidification member.

The area of the water supply hole or the water supply slit and a level of the water stored in the water supply tank 320 may be variables for determining the amount of the water supplied to the humidification member 310 from the water supply tank 320 per hour. The amount of the hourly supplied water or the hourly used water may be determined by adjusting the water level inside the water supply tank 320 and each area of the water supply hole and the water supply slit.

The humidifying unit 300 may include a water level sensor 322 provided in the water supply tank 320 and a water supply pipe 360 having a water supply valve 362.

Unless it is a top closed type, the water supply tank 320 may include the water level sensor 322 to prevent overflow. The water level sensor may be float switch.

The water supply valve 362 may be provided to selectively block the water supplied to the water supply pipe 360 supplying the water to the water supply tank 320.

When the water level of the water supply tank detected by the water level sensor 322 reaches a preset highest level, the water supply valve 362 may be closed. When the water level is lowered than a preset lowest level, the water supply valve 362 may be open.

Also, when the water level of the water stored in the water supply tank is increased to be the preset minimum level or more, the ventilating apparatus may be operated. However, when only the humidification function is stopped to operate or the ventilating apparatus is stopped to operate, the water supply may be blocked.

According to the embodiment shown in FIG. 5, the humidifying unit 300 may further include a drain pan 340 provided below a second water supply tank 330.

If the water supply fails to be controlled by a malfunction of the water supply valve 362, the drain fan 340 may prevent overflowing water from flowing outside. Also, a drainage pipe 350 may be further provided to drain the water collected in the drain pan 340. The drainage pipe 350 may be connected with a sewerage system. Of course, the drain fan itself may be a detachable type.

The water consumption amount may be adjusted by an area of a slit (not shown) or an area of a water supply hole (not shown) formed in a bottom of the water supply tank 320. The adjustment of the water supply amount may be enabled by adjusting an opening level of the water supply valve 362.

As mentioned above, the humidification member may have the flat water absorbents 315a and the bending water absorbents 315b that are alternated with each other. Because of that, the effect of extending the passage of the water flowing along the surface of the humidification member may be achieved and the effect of enlarging the height of the humidification member may be achieved accordingly. As a result, the humidification efficiency of the humidification member 310 may be enhanced.

The corrugation shape of the humidification member may reduce the amount of the water drained to the drainage pipe 360 via the drain pan 340. In addition, the humidification member 310 may be rectangular-shaped and the accumulation scales contained in the supplied water may be reduced as much as possible.

If the scale accumulation is reduced as much as possible, there may be an effect of enhanced durability of the humidification member 310.

However, the humidification member 310 may be replaceable periodically even if the durability thereof is enhanced. Because of that, a structure enabling the humidification member to be replaceable efficiently has to be put into operation.

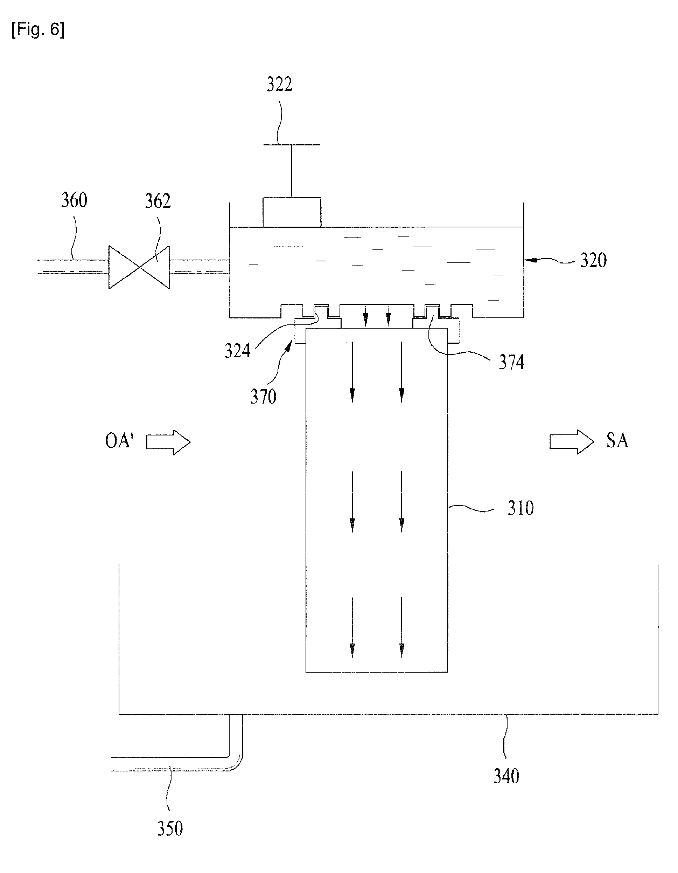

FIG. 6 illustrates another embodiment of the humidifying unit provided in the ventilating apparatus according to the present invention. Here, repeated description with respect the description in reference to FIG. 5 will be omitted. According to the embodiment shown in FIG. 6, a guide rail may be provided along a side of the humidification member 310 and a side of the water supply tank 320, and a guide groove may be provided along the other opposite sides. Because of that, the humidification member may be selectively inserted or withdrawn along a perpendicular direction to the water transmission direction and the water supply direction.

The humidification member 310 sown in FIG. 6 may be configured to be withdrawn in a state of coupled to a coupling material 370, to improve service convenience.

In detail, a guide rail 374 may be provided in a coupling material 370 coupled to a top of the humidification member 310 and a guide groove 324 may be provided in a bottom of the water supply tank 320. However, the position of the guide rail may be exchanged with the position of the guide groove. As a result, the guide rail and the guide groove may enable the humidification member 310 to be withdrawn along a perpendicular direction (a perpendicular direction to the ground) to the transmission direction of the sucked-air (along a right direction from a left direction) and the water supply direction (along a lower direction from an upper direction), to be replaced or repaired. Because of that, user convenience may be improved and productivity may be improved.

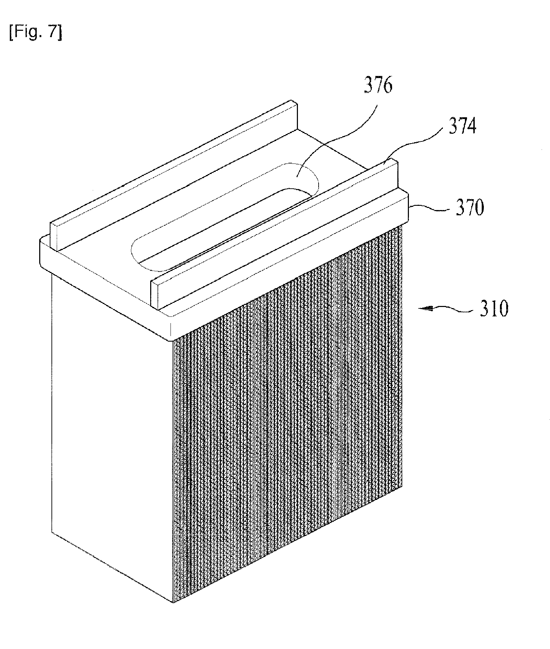

FIG. 7 is a perspective view of the humidification member 310 shown in FIG. 6. The humidification member 310 may have the coupling material 370 coupled to the top thereof and the guide rail 374 integrally formed therewith.

The water supplied via the water supply hole or the water supply slit formed in the bottom of the water supply tank 320 may be absorbed by the humidification member 310 via an opening 376 formed in the coupling material.

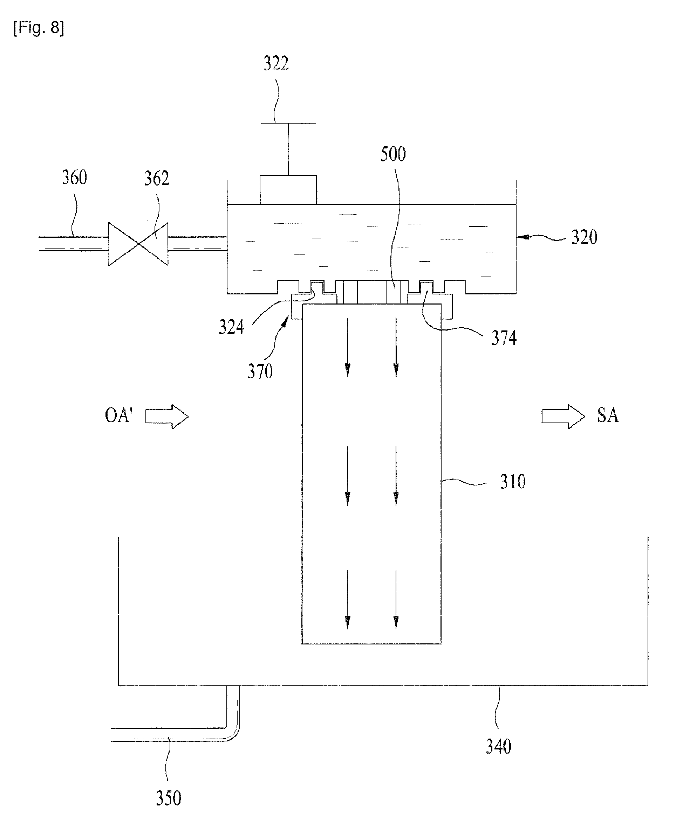

FIG. 8 illustrates a conceptual diagram illustrating a further embodiment of the humidifying unit provided in the ventilating apparatus according to the present invention. Repeated description with respect to the description in reference to FIGS. 5 and 6 will be omitted.

The water supply tank 320 may be placed on the top of the humidifying unit 310. Because of that, the water supplied from the water supply tank 320 might be discharged surroundings, with failing to be absorbed into the humidification member 310, even if the areas of the water supply slit and the water supply hole are adjusted.

A sealing material may be provided between the water supply tank 320 and the humidification member 310. According to the embodiment shown in FIG. 8, the sealing material 500 may be provided between the water supply tank 320 and the coupling material 370 composing the humidification member 310. The sealing material 500 may be in parallel to the guide rail 374 or the guide groove 324.

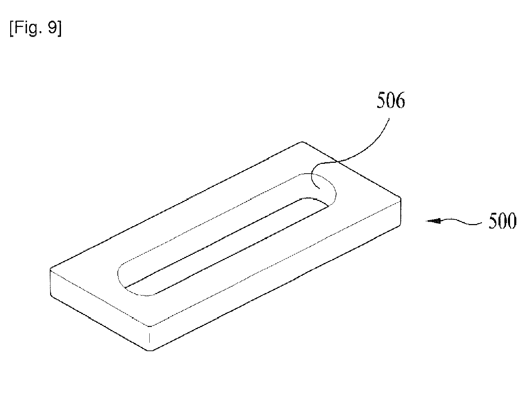

FIG. 9 illustrates an embodiment of the sealing material 500.

The sealing material 500 may be formed of rubber or silicon and it may be a band type having an opening 506 provided corresponding to the opening 376 of the coupling material 370.

As a result, the sealing material 500 may be employed to reduce a predetermined amount of water discharged by the humidification member 310 while supplied from the water supply tank 320, failing to be absorbed into the humidification member 310.

However, even when the sealing material 500 is provided, a predetermined amount of water fails to be absorbed into the humidification member and the water falls into the drain pan 340 and to be drained. In this case, the water falling from the humidification material 310 failing to be evaporated after absorbed into the humidification member 310 may be drained via the drain pan 340. The water falling from the humidification material 310, failing to be evaporated after absorbed into the humidification member 310 may be contaminated by water contaminants (scales) remaining in the moisture absorbents 315a and 315b provided in the humidification member 310 while flowing between the moisture absorbents 315a and 315b. Because of that, the water may be drained.

If the contaminated water is used for the humidification after re-absorbed into the humidification member 310, a life span of the humidification member may be reduced.

However, the water falling outside the humidification member 310, failing to be absorbed into the humidification member 310 out of the water supplied from the water supply tank 320 may not be contaminated. If that water is not used but drained, water consumption might be increased. A structure enabling that water to be re-used may be necessary.

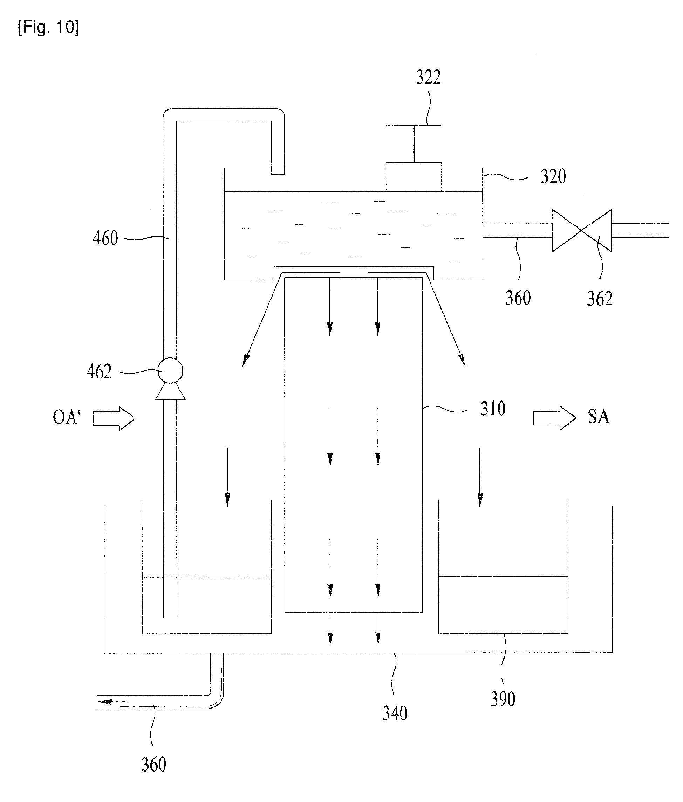

FIG. 10 is a conceptual diagram illustrating a still further embodiment of the humidifying unit provided in the ventilating apparatus according to the present invention. Repeated description with respect to the description in reference to FIGS. 5, 6 and 8 will be omitted.

The humidifying unit according to the embodiment of present invention may include the water supply tank 320 to store water therein, the humidification member 310 to absorb the water supplied from the water supply tank 320 and to humidify air passing therein by using the absorbed water, a water collecting tank 390 to collect water falling outside the humidification member 310, failing to be absorbed into the humidification member 310 out of the water supplied to the humidification member 310, a collecting pipe 460 to provide a passage used for collecting the water collected in the water collecting tank 390, and a drain pan 340 to drain the water discharged after absorbed into the humidification member 310 out of the water supplied to the humidification member 310.

The humidifying unit 300 shown in FIG. 10 may include the water collecting tank 390 around a lower portion of the humidification member 310. The water collecting tank 390 may collect the water falling outside the humidification member 310, failing to be absorbed into the humidification member 310, out of the water supplied from the water supply tank 320. Out of the water supplied from the water supply tank 320, the water falling outside the humidification member 310, with failing to be absorbed into the humidification member 310, may have a low contaminant level and it may be collected for re-usage. As a result, the water collected in the water collecting tank 390 may be re-supplied to the water supply tank 320, to be supplied to the humidification member 310.

The humidifying unit 300 may include a collecting pump 462 to pump the water collected in the water collecting tank 390 and a collecting pipe 460 to guide the water pumped by the collecting pump 462 toward the water supply tank 320.

The water collected in the water collecting tank 390 may be re-supplied to the water supply tank 320 by the collecting pipe 460 configured to connect the water collecting tank 390 and the water supply tank 320 with each other. The collecting pump 462 may be provided in the collecting pipe 460, to pump the water collected in the water collecting tank 390 toward the water supply tank 320.

The water collecting tank 390 and the water collecting structure thereof may realize the humidification function and minimize the amount of the wasted water.

There may be provided the drainage unit including the drainage pipe 360 and the drain pan 340 may be provided to drain the water introduced into the opening 394 out of the water supplied to the humidification member 310.

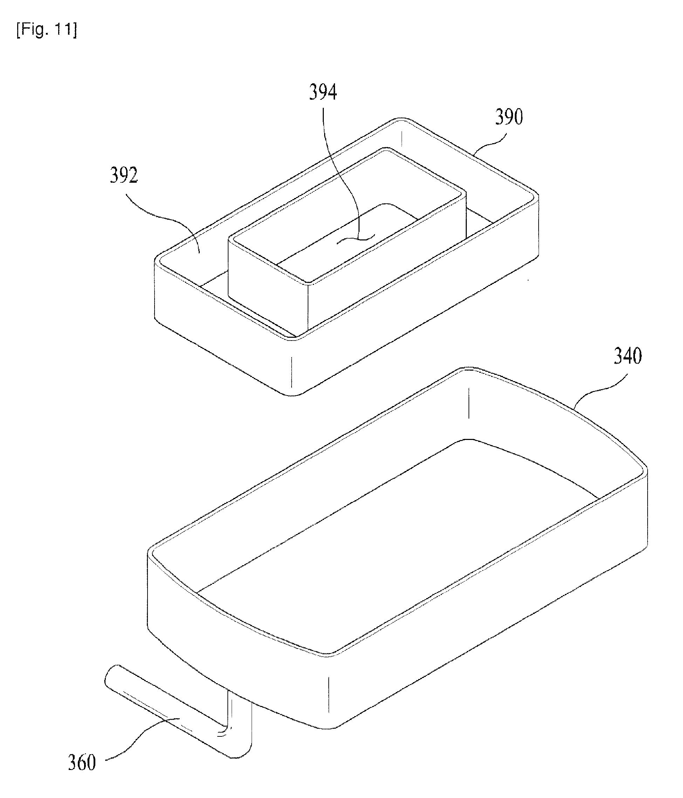

FIG. 11 is a perspective view illustrating the water collecting tank 390 and the drain pan 340. The water collecting tank 390 may include an accommodation space 392 formed in a ring shape, to have the structure of re-supplying the water collected therein to the water supply tank 320 by a single collecting pipe. The area of the opening 394 formed in the humidification member 310 may be larger than the area of the bottom surface of the humidification member 310.

This is because the water falling to the drain pan 340, failing to be evaporated after absorbed into the humidification member 310, has to be prevented from mixed with the water falling to the water collecting tank, failing to be absorbed into the humidification member 310. As a result, the water falling to the drain pan 340, failing to be evaporated after absorbed into the humidification member 310, may be drained toward the drain pan 340 via the opening 394. The water falling to the water collecting tank 390, failing to be absorbed into the humidification member 310, may be collected in the accommodation space 392 of the water collecting tank 390. After that, the collected water may be re-supplied to the water supply tank 320.

Although embodiments have been described with reference to a number of illustrative embodiments thereof, it should be understood that numerous other modifications and embodiments can be devised by those skilled in the art that will fall within the spirit and scope of the principles of this disclosure. More particularly, various variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

## Claims

1. A ventilating apparatus comprising:
a ventilating unit comprising a heat exchanger to heat-exchange air (room air) exhausted from a room with air sucked from the outside (outside air);
a humidifying unit comprising a water supply tank to store water configured to humidify the sucked-air (the outside air) sucked by the ventilating unit and a humidification member to humidify the air heat-exchanged in the heat exchanger of the ventilating unit, while having the air to pass there through; and
a collecting unit comprising a water collecting tank to collect water failing to be absorbed into the humidification member out of the water supplied from the water supply tank and a collecting pipe to guide the water collected in the water collecting tank toward the water supply tank,
wherein the water supply tank is provided beyond the humidification member and the water collecting tank is provided below the humidification member.

2. The ventilating apparatus according to claim 1, wherein the humidifying unit comprises a water level sensor provided in the water supply tank and a water supply pipe comprising a water supply valve.

3. The ventilating apparatus according to claim 2, wherein the water supply valve is closed when a water level inside the water supply tank that is detected by the water level sensor reaches a preset maximum level, and the water supply valve is open when a water level inside the water supply tank lowered than a preset minimum level.

4. The ventilating apparatus according to claim 2, wherein the humidifying unit comprises a water supply pump to pump the water collected in the water collecting tank and a collecting pipe to guide the water pumped by the water supply pump toward the water supply tank.

5. The ventilating apparatus according to claim 1, wherein a plurality of water supply holes are formed in a bottom of the water supply tank along a width direction of the humidification member, spaced apart a predetermined distance from the humidification member, or at least one water supply slit is formed in the bottom of the water supply tank along the width direction of the humidification member, to supply the water stored in the water supply tank.

6. The ventilating apparatus according to claim 1, wherein the humidification member of the humidifying unit comprises a plurality of bending sheets spaced apart a preset distance from each other, with a corrugation shape, and a plurality of flat sheets provided between two of the bending sheets, respectively.

7. The ventilating apparatus according to claim 6, wherein the humidification member of the humidifying unit is a flat panel type along a transmitting direction of the air heat-exchanged in the heat exchanger of the ventilating unit.

8. The ventilating apparatus according to claim 1, wherein a guide rail is provided along a side of each of the humidification member and the water supply tank, and a guide groove is provided along the other side, to selectively slide-insert or slide-withdraw the humidification member.

9. The ventilating apparatus according to claim 1, wherein a sealing material is provided between the water supply tank and the humidification member.

10. The ventilating apparatus according to claim 9, wherein a guide rail is provided along a side of each of the humidification member and the water supply tank, and a guide groove is provided along the other side, to selectively slide-insert or slide-withdraw the humidification member, and the sealing material is provided in parallel to the guide rail or the guide groove.

11. The ventilating apparatus according to claim 10, wherein, the sealing material is a band surrounding the guide rail and the guide groove.

12. The ventilating apparatus according to claim 1, wherein the water collecting tank of the collecting unit collects water falling outside the humidification member, failing to be absorbed into the top of the humidification member, out of the water supplied to the humidification member from the water supply tank.

13. The ventilating apparatus according to claim 12, wherein the water collecting tank comprises a ring-shaped accommodation space and an opening to open the accommodation space.

14. The ventilating apparatus according to claim 14, wherein the collecting unit comprises a collecting pump to pump the water collected in the accommodation space of the water collecting tank toward the water supply tank via a collecting pipe.

15. The ventilating apparatus according to claim 13, further comprising:
a drainage unit comprising a drainage pipe to drain the water introduced into the opening out of the water supplied to the humidification member; and a drain pan.

16. The ventilating apparatus according to claim 1, further comprising:
a heating/cooling unit to heat or cool the outside air supplied to the humidifying unit,
wherein the heating/cooling unit comprises a heating/cooling coil including a plurality of fins and a refrigerant pipe passing through the plurality of the fins; and an expansion valve.

17. A humidifying unit comprising:
a water supply tank to store water therein;
a humidification member to absorb the water supplied from the water supply tank and to humidify air passing there through;
a water collecting tank to collect water falling outside the humidification member, failing to be absorbed, out of the water supplied to the humidification member;
a collecting pipe to provide a passage to re-supply the water collected in the water collecting tank toward the water supply tank; and
a drain pan to drain the water discharged after absorbed into the humidification member out of the water supplied to the humidification member.

18. The humidifying unit according to claim 17, wherein the humidification member comprises a plurality of bending sheets spaced apart a preset distance from each other, with a corrugation shape, and a plurality of flat sheets provided between two of the bending sheets, respectively, and the humidification member is a flat panel type along a transmitting direction of the air heat-exchanged in the heat exchanger of the ventilating unit.

19. The humidifying unit according to claim 18, wherein a guide rail is provided along a side of each of the humidification member and the water supply tank, and a guide groove is provided along the other side, to selectively slide-insert or slide-withdraw the humidification member, and
a sealing material is provided between the water supply tank and the humidification member.

20. The humidifying unit according to claim 17, wherein the water collecting tank comprises a ring-shaped accommodation space and an opening to open the accommodation space, and the drain pan drains the water discharged from the humidification member via an opening of the water collecting tank.
